Europäisches Patentamt

European Patent Office

Office européen des brevets

(11) Veröffentlichungsnummer: **0 515 932 A1**

(12) **EUROPÄISCHE PATENTANMELDUNG**

(21) Anmeldenummer: **92108268.1**

(22) Anmeldetag: **15.05.92**

(51) Int. Cl.5: **B01F 15/02**, B29C 31/02

(30) Priorität: **29.05.91 CH 1587/91**

(43) Veröffentlichungstag der Anmeldung:
**02.12.92 Patentblatt 92/49**

(84) Benannte Vertragsstaaten:
**DE FR GB**

(71) Anmelder: **BUCHER-GUYER AG Maschinenfabrik**

**CH-8166 Niederweningen(CH)**

(72) Erfinder: **Rizzoni, Jean-Pierre**
**20 Allée Levant**
**F-95150 Taverny(FR)**

(54) **Vorrichtung zur Beschickung einer Plastifiziereinrichtung.**

(57) Eine Beschickungseinrichtung (1) ist einer Plastifizier-Einrichtung für Polyester über eine Stopfeinheit vorgeschaltet. Die Beschickungseinrichtung (1) weist einen Materialaufnahmebehälter (2) und einen, mit diesem verbundenen, von der Stopfeinheit horizontal abstehenden Schneckenförderer (4) auf. Mit dem Materialaufnahmebehälter (2) an dessen oben liegender Einfüllöffnung verbunden ist auch ein Behälter (19) für flüssiges Styrol. Dieser Behälter (19) erstreckt sich kastenartig horizontal und weist mit dem Materialaufnahmebehälter (2) eine gemeinsame, infolge von Öffnungen für Styrol durchlässige Wand auf, welche mittels eines Verschluss- Schiebers (22) abdichtbar ist. Durch die Öffnungen in der Wand verbreitet sich das Styrol vom Behälter (19) in den Materialaufnahmebehälter (2).

Fig. 1

EP 0 515 932 A1

Die Erfindung betrifft eine Vorrichtung zur Beschickung einer Plastifiziereinrichtung gemäss Oberbegriff des Patentanspruches 1.

Bei einem bekannten Verarbeitungsverfahren basierend auf einer Spritzgiessmaschine mit der Bezeichnung ZMC-Billion zur Verarbeitung von Polyester ist über der Plastifiziereinrichtung eine mit dieser kommunizierende Stopfeinheit befestigt, an deren oberem Ende eine seitlich abstehende Beschickungsvorrichtung mit einem in einem Zylindergehäuse geführten Kolben vorgesehen ist. Das Zylindergehäuse besitzt vor der hinteren Endlage des Kolbens eine nach oben gerichtete Oeffnung, die mit einem Materialaufnahmebehälter verbunden ist. Das über den Materialaufnahmebehälter zugeführte Polyester fliesst vor den Kolbenboden in das Zylindergehäuse und wird von dort durch den Kolben in die Stopfeinheit verdrängt.

Diese Konstruktion ist mit verschiedenen Nachteilen behaftet.

Beim Ueberschreiten der Austrittsöffnung des Materialaufnahmebehälters durch den vorgeschobenen Kolben, bildet sich ein dichter Raum zwischen Stopfeinheit und Kolbenboden, aus dem die mit der Polyester-Masse mitgeführten Gase nicht mehr entweichen können. Diese Situation kann zu Gaseinschlüssen im Polyester und anschliessend zu masslichen Fehlern an den Formlingen führen.

Durch die notwendige Kolbenbewegung entsteht ein relativ grosser Raumbedarf und der sich zur Stopfeinheit hin kegelförmig verengende Zylinderraum erweist sich als serviceunfreundlich, insbesondere beim Reinigen.

Durch die Kolbenbewegungen entsteht eine diskontinuierliche Arbeitsweise, die sich zeitlich auf den Fertigungsvorgang negativ auswirkt. Die Verwendung eines Kolbens für die Zustellung des Polyesters aus dem Materialaufnahmebehälter zu der Stopfeinheit verlangt einen längeren Kolbenmantel, der die Austrittsöffnung überdeckt, damit aus dem Materialaufnahmebehälter kein Polyester hinter den vorgetriebenen Kolben fliessen kann.

Aufgabe der vorliegenden Erfindung ist es somit, eine Vorrichtung der eingangs genannten Art zu schaffen, durch die die aufgeführten Nachteile behoben werden und die der Homogenität des zu verarbeitenden Materials förderlich ist und durch geringeren Aufwand weniger Raum beansprucht.

Erfindungsgemäss wird diese Aufgabe dadurch gelöst, dass die an der Plastifiziereinrichtung angeordnete Stopfeinheit mit einer etwa horizontal abstehenden, als Schneckenförderer ausgebildeten Beschickungsvorrichtung verbunden ist, deren Schneckengänge sich über die Austrittsöffnung des Materialaufnahmebehälters erstrecken.

Diese Ausführungsform gestattet eine kompakte Bauweise von Stopfeinheit und Beschickungsvorrichtung.

Ein erheblicher Vorteil kann dadurch erzielt werden, dass ein Schneckenförderer auf das zu verarbeitende Material eine Einzugswirkung ausübt.

Ebenso bedeutend ist, dass der Schneckenförderer beim Transport des Materials weitermischend wirkt und eine Verdichtung erzeugt, so dass die eingeschlossenen Gase noch vor der Stopfeinheit aus dem Material entweichen können.

Als besonders geeignet erweist sich eine erfindungsgemässe Ausführung, wenn ein den Materialaufnahmebehälter bildender, sich nach oben erstreckender Mantel mit der Förderschnecke des Schneckenförderers einen unterschlächtigen Förderkanal bildet, über den das Material parallel zur Längsachse des Schneckenförderers verschoben wird.

Im Interesse eines störungsfreien Förderflusses ist die Förderschnecke fliegend im Materialaufnahmebehälter gelagert, derart, dass das Material hindernisfrei transportiert werden kann.

Günstig erweist sich hierzu die Lagerung der Förderschnecke an der von der Stopfeinheit gegenüberliegenden Seite des Materialaufnahmebehälters, u.a. weil durch die bestimmte Förderrichtung das Material vom Lager weggefördert wird.

Dennoch kann zum Schutz gegen Verschmutzung im Materialaufnahmebehälter vor der Lagerung der Förderschnecke eine Dichtung vorgesehen sein.

Zur Meidung eines sich Festsetzens des Materials an der vorderen Kante, gebildet aus Mantel und Schneckenförderer, schliesst der Mantel des Materialaufnahmebehälters wenigstens über der Materialaustrittsöffnung mit der Achse des Schneckenförderers einen spitzen Winkel ein.

Zur Herabsetzung der Styrolkonzentration weist der Materialaufnahmebehälter am oberen Ende einen abhebbaren Deckel auf, der zur Verhinderung von flüchtigen Styrolgasen und -dämpfen sowie das Eindringen von Fremdkörpern vorgesehen ist.

Um die Verflüchtigung der Styrolgase zu minimalisieren ist der Deckel bzw. der Rand des Materialaufnahmebehälters mit einer Dichtung versehen.

Die durch den Kontakt mit der Umgebungsluft entstehende Aushärtung der Polyestermasse kann dadurch reduziert werden, dass dem Materialaufnahmebehälter Styrol zugeführt wird. Dieser Vorgang erfolgt vorteilhaft mit einer Einrichtung, welche flüssiges Styrol im Materialaufnahmebehälter verbreitet bzw. dampfartig verteilt bzw. mit der vorhandenen Luft verbindet, sodass eine der Aushärtung des Polyesters verhindert werden kann und an den Wänden haftende Teile des Polyesters einfach entfernbar sind bzw. ein Ansetzen des Polyesters an den Wänden des Materialaufnahmebehälter reduziert werden kann.

Zweckmässigerweise wird dafür ein mit dem Materialaufnahmebehälter verbundener, eine Einfüll- und Entleerungsöffnung aufweisender Styrolbehälter verwendet, der vorteilhaft ausserhalb ersterens angeordnet ist.

In diesem Sinn weisen der Materialaufnahmebehälter und der Styrolbehälter vorteilhaft eine gemeinsame, durchlässige

Wand auf, durch welche Styroldämpfe von dem Styrolbehälter in den Materialaufnahmebehälter dringen.

Das Mass der Anreicherung von Styrol an der Luft kann vorzugsweise durch einen die durchlässige (perforierte) Wand wahlweise abdichtenden Verschluss-Schieber vorgenommen werden.

Nachfolgend wird die Erfindung anhand eines in der Zeichnung dargestellten Ausführungsbeispiels erörtert. Es zeigen:

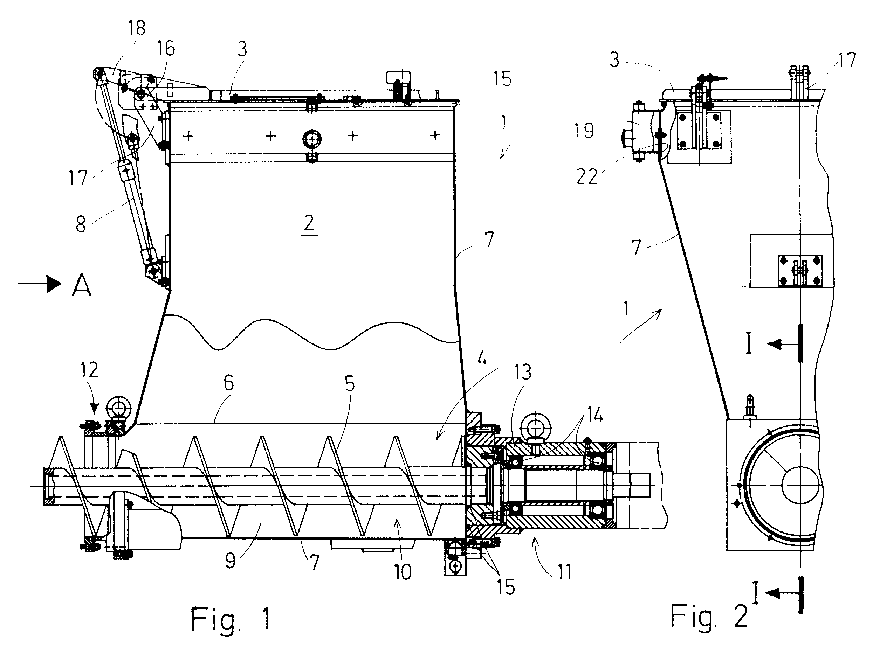

Fig. 1 einen teilweisen Längsschnitt gemäss Linie I÷I / eine teilweise Ansicht der erfindungsgemässen Vorrichtung gemäss Fig. 2 und

Fig. 2 eine hälftige Seitenansicht gemäss Pfeil A in Fig. 1.

Die Figuren zeigen eine Beschickungseinrichtung 1 an der rückwärtigen Seite einer nicht dargestellten Stopfeinheit, die einer Plastifiziereinrichtung zur Verarbeitung zähflüssiger bzw. teigartigen Massen, wie bspw. Polyester oder dgl. Materialien, stromabwärts vorgeschaltet ist. Zu diesem Zwecke besitzt die Beschickungseinrichtung 1 einen Materialaufnahmebehälter 2, der durch einen aufklappbaren Deckel 3 verschliessbar ist und der fassweise oder aus anderen Gebinden beschickbar ist.

Die an der Plastifiziereinrichtung befestigte Stopfeinheit ist mit einer etwa horizontal abstehenden, als Schneckenförderer 4 ausgebildeten Beschickungsvorrichtung verbunden, deren Schneckengänge 5 sich über die Austrittsöffnung 6 des Materialaufnahmebehälters 2 erstrecken. Der Materialaufnahmebehälter 2 besteht aus einem etwa senkrecht nach oben verlaufenden Behältermantel 7, an dessen oberem Ende der Deckel 3 anliegt, der scharnierend an der Behältermantelaussenseite befestigt ist und mittels einer Kolben-Zylinder-Einheit 8 betätigt wird.

An seiner Unterseite bildet der Mantel 7 des Materialaufnahmebehälters 2 mit dem Schneckenförderer 4 einen unterschlächtigen Förderkanal, wobei die Schneckengänge 5 vorteilhaft den sie umgebenden Mantel 7 zur Reinigung berühren. Die Lagerung der Förderschnecke 10 erfolgt fliegend, durch ein der Stopfeinheit gegenüberliegendes und an der Aussenseite des Aufnahmebehälters 2 befestigtes Lager 11.

Die Förderschnecke 10 ist weiterhin an dem Mantel 7 des unterschlächtigen Förderkanals 9 und in einem mit der Stopfeinheit verbundenen flanschartigen Führungsring 12 geführt.

Das Lager 11, in welchem die Förderschnecke 10 drehbar angeordnet ist, besitzt einen an einem behälterseits vorkommenden Gegenflansch 15 befestigten Lagerhals 13 mit zwei voneinander beabstandeten Radialwälzlagern 14. Dichtungen 15 im Bereich der Verbindungsstelle zwischen Aufnahmebehälter 2 und Lager 11 verhindern den Zutritt der zähflüssigen Massen zu den Lagerstellen des Lagers 11.

Der zwischen dem Lager 11 und dem Führungsring 12 sich befindende Mantel 7 des Aufnahmebehälters 2 bildet über der Austrittsöffnung des Schneckenförderers 4 einen mit dessen Achse spitzen Winkel, wodurch der zähflüssigen Masse günstige Einzugsvoraussetzungen vermittelt werden.

Andererseits ist der Behälter mit Ausnahme des Bereichs, in welchem die Wände von der Längsachse des Schneckenförderers durchsetzt werden, sich konisch nach unten verjüngend ausgebildet.

Wahlweise besitzt der Deckel 3 oder der obere Rand des Aufnahmebehälters 2 eine Dichtung 15. Das Scharnier 16 des Deckels 3 ist an einem am Behälter 2 befestigten Support 17 vorgesehen und der Deckel 3 wird über einen an ihm befestigten hebelartigen Ausleger 18, der mit der Kolben-Zylinder-Einheit 8 verbunden ist, angehoben und abgesenkt.

An wenigstens einer der Aussenseiten ist im Bereich des oberen Randes desAufnahmebehälters 2 ein zur Aufnahme von flüssigem Styrol vorgesehener, sich horizontal erstreckender, kastenartiger Behälter 19 angebracht, dessen Innenraum mit dem Innern des Aufnahmebehälters 2 kommuniziert.

Dazu weist der Styrolbehälter 19 Einfüll- 20 und Entleerungsöffnungen 21 auf.

Im Bereich des Styrolbehälters 19 ist der Mantel 7 des Aufnahmebehälters 2 mit Oeffnungen oder einer Perforation versehen, sodass Dämpfe des in dem Aufnahmebehälter 2 sich befindenden Styrols entweichen können. Die zwischen Aufnahme- 2 und Styrolbehälter 19 bestehende Oeffnung oder Oeffnungen können durch einen Verschluss-Schieber 22 dicht verschlossen werden.

**Patentansprüche**

1. Einrichtung zur Beschickung einer Plastifiziereinrichtung für die Verarbeitung zähflüssiger Massen wie Polyester oder dgl. Materialien, welche einer mit der Plastifiziereinrichtung kommunizierenden Stopfeinheit stromabwärtsgerichtet vorgeschaltet ist und einen zur Beschickungsvorrichtung hin offenen Materialaufnahmebehälter aufweist, dadurch gekennzeichnet, dass die an der Plastifiziereinrichtung angeordnete Stopfeinheit mit einer etwa horizontal abstehenden, als Schneckenförderer (4) ausgebildeten Beschickungsvorrichtung verbunden ist, deren Schneckengänge (5) sich über die Austrittsöffnung (6) des Materialaufnahmebehälters (2) erstrecken.

2.  Vorrichtung nach Anspruch 1, dadurch gekennzeichnet, dass ein den Materialaufnahmebehälter (2) bildender, sich nach oben erstreckender Mantel (7) der Förderschnecke (10) einen unterschlächtigen Förderkanal (9) bildet.

3.  Vorrichtung nach Anspruch 2, dadurch gekennzeichnet, dass die Förderschnecke (10) fliegend im Materialaufnahmebehälter (2) gelagert ist.

4.  Vorrichtung nach Anspruch 3, dadurch gekennzeichnet, dass die Lagerung der Förderschnecke (10) an der von der Stopfeinheit gegenüberliegenden Seite des Materialaufnahmebehälters (2) angeordnet ist.

5.  Vorrichtung nach Anspruch 3, dadurch gekennzeichnet, dass der Materialaufnahmebehälter (2) vor der Lagerung der Förderschnecke (10) mit einer Dichtung (15) versehen ist.

6.  Vorrichtung nach einem der Ansprüche 1 bis 5, dadurch gekennzeichnet, dass der Mantel (7) des Materialaufnahmebehälters (2) wenigstens über der Materialaustrittsöffnung (6) mit der Achse des Schneckenförderers (4) einen spitzen Winkel bildet.

7.  Vorrichtung nach einem der Ansprüche 1 bis 6, dadurch gekennzeichnet, dass der Materialaufnahmebehälter (2) am oberen Ende einen abhebbaren Deckel (3) aufweist.

8.  Vorrichtung nach Anspruch 7, dadurch gekennzeichnet, dass der Deckel (3) bzw. der Rand des Materialaufnahmebehälters (2) einer Dichtung (15) versehen ist.

9.  Vorrichtung nach einem der Ansprüche 1 bis 8, dadurch gekennzeichnet, dass der Materialaufnahmebehälter (2) mit einer Styrol verbreitenden Einrichtung verbunden ist.

10.  Vorrichtung nach Anspruch 9, dadurch gekennzeichnet, dass ausserhalb des Materialaufnahmebehälters (2) wenigstens ein mit diesem räumlich verbundener, eine Einfüll- (20) und eine Entleerungsöffnung (21) aufweisender, kastenartig ausgebildeter Styrolbehälter (19) angeordnet ist.

11.  Vorrichtung nach einem der Ansprüche 9 und 10, dadurch gekennzeichnet, dass der Materialaufnahmebehälter (2) und der Styrolbehälter (19) eine gemeinsame, durchlässige Wand aufweisen.

12.  Vorrichtung nach Anspruch 11, dadurch gekennzeichnet, dass die durchlässige Wand mittels Verschluss-Schieber (22) abdichtbar ist.

Fig. 2

Fig. 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 507 202 (DETEC FERTIGUNG GMBH) <br> * Spalte 2, Zeile 64 - Spalte 3, Zeile 50; Abbildung 1 * <br> --- | 1-12 | B01F15/02 <br> B29C31/02 |
| X | PATENT ABSTRACTS OF JAPAN <br> vol. 9, no. 287 (C-314)(2010) 14. November 1985 <br> & JP-A-60 132 632 ( MATSUSHITA DENKI SANGYO KK ) <br> 15. Juli 1985 <br> * Zusammenfassung * <br> --- | 1-8 | |
| X | US-A-3 414 168 (ECKHARDT) <br> * Anspruch 1; Abbildung 2 * <br> --- | 1-8 | |
| X | CH-A-286 716 (FARBENFABRIKEN BAYER) <br> * Anspruch 1; Abbildung 2 * <br> --- | 1-8 | |
| A | FR-A-2 530 157 (PROTEINOR) <br> * Anspruch 1; Abbildung 1 * <br> ----- | 1-12 | |

| RECHERCHIERTE SACHGEBIETE (Int. Cl.5) |
|---|
| B01F <br> B29B <br> B29C |

Der vorliegende Recherchenbericht wurde für alle Patentansprüche erstellt

| Recherchenort | Abschlußdatum der Recherche | Prüfer |
|---|---|---|
| DEN HAAG | 01 SEPTEMBER 1992 | KIRSTEN K.R.M. |